# EUROPÄISCHE PATENTANMELDUNG

(11) **EP 2 863 352 A1**
(43) Veröffentlichungstag der Anmeldung: **22.04.2015**
(21) Anmeldenummer: 14183156.0
(22) Anmeldetag: 02.09.2014
(51) Int. Cl.: G06Q 20/32

(54) **Verfahren zur Kontrolle eines Bezahlvorgangs durch einen Händler**

(30) Priorität: 21.10.2013 DE 102013111567
(71) Anmelder: Deutsche Post AG, 53113 Bonn (DE)
(72) Erfinder: Langer, Frank, 53844 Troisdorf (DE); Engelhard, Steven, 53881 Euskirchen (DE); Weise, Alexander, 53111 Bonn (DE)
(74) Vertreter: Michalski Hüttermann & Partner Patentanwälte mbB

(57) **Zusammenfassung**

Gegenstand der Erfindung ist ein Verfahren zum Kontrollieren einer Transaktion zwischen einem Käufer (1) und einem Händler (2) zum Erwerb einer Ware (3), mit einem mobilen Endgerät (4), das zum Ausführen des Verfahrens eingerichtet ist, umfassend die Schritte:
a) Einlesen eines dem Händler (2) zugeordneten Identifikationscodes (6) durch das mobile Endgerät (4),
b) Erfassen eines Kaufbetrags (10) der Ware (3) und einer Transaktionsnummer (7) einer Transaktionsliste (8) durch das mobile Endgerät (4),
c) Veranlassen einer Gutschrift des Kaufbetrages (10) für den Händler (2) durch das mobile Endgerät (4),
d) Empfangen einer Quittierung (12) der Gutschrift durch das mobile Endgerät (4), wobei
die Quittierung (12) wenigstens drei unterschiedliche Transaktionscodes (14, 15, 16) umfasst,
der erste Transaktionsode (14) die Transaktionsnummer (7) sowie eine der Transaktionsnummer (7) zugeordnete erste Transaktionscodierung (9) der Transaktionsliste (8) umfasst,
der zweite Transaktionscode (15) eine zweite der Transaktionsnummer (7) zugeordnete Transaktionskodierung (15) der Transaktionsliste (8) umfasst, und
der dritte Transaktionscode (16) den Kaufbetrag (10) und eine dritte dem Kaufbetrag (10) und der Transaktionsnummer (7) zugeordnete Transaktionscodierung (17) umfasst, und
e) Darstellen der Transaktionscodes (14, 15, 16) der Quittierung (12) auf einem Display (13) des mobilen Endgerätes (4).

## Beschreibung

Die Erfindung betrifft ein Verfahren zum Kontrollieren einer Transaktion zwischen einem Käufer und einem Händler zum Erwerb einer Ware, mit einem mobilen Endgerät. Zudem betrifft die Erfindung ein Verfahren zum Stornieren der Transaktion zwischen dem Käufer und dem Händler beim Erwerb der Ware mit dem mobilen Endgerät. Ferner betrifft die Erfindung ein Computersystem, eingerichtet zum Betreiben des Verfahrens sowie ein Bezahlsystem mit dem Computersystem und dem mobilen Endgerät, wobei das mobile Endgerät mit dem Computersystem über eine drahtlose Datenverbindung zur Ausführung des Verfahrens verbunden ist.

Elektronische Verfahren zur Unterstützung geschäftlicher Transaktionen, so insbesondere zum Bezahlen von Waren und Dienstleistungen, sind in vielfachen Ausgestaltungen aus dem Stand der Technik bekannt und ermöglichen beispielsweise das bargeldlose Bezahlen bei einem Händler oder in einem Geschäft unter Verwendung einer Bezahlkarte, wie einer Girokarte oder einer Kreditkarte. Damit eine derartige Transaktion zur Bezahlung der Ware per Girokarte bzw. Kreditkarte möglich ist, muss der Händler über einen elektronischen Kartenleser verfügen. Nach Erfassung der Bezahlkarte durch den Kartenleser wird über eine Datenleitung eine Verbindung mit einem Bezahlsystem aufgebaut, so dass vom Geschäft des Händlers aus die Bezahlung der Ware initiiert werden kann.

Um nun solches bargeldlose Bezahlen zu ermöglichen, müssen die betreffenden Händler jedoch die dafür notwendige technische Infrastruktur bereitstellen. Neben dem entsprechenden Kartenleser wird auch eine Datenverbindung zu dem Bezahlsystem benötigt, so zu einer die Karte herausgebenden Kartengesellschaft oder Bank. Allerdings sind nicht selten kleinere Geschäfte wie Kioske oder räumlich abseits gelegene oder mobile Geschäfte nicht in der Lage, die notwendige technische Infrastruktur für ein derartiges elektronisches Bezahlverfahren bereitzustellen. Denn gerade für kleinere Geschäfte oder Geschäfte mit nur wenig Umsatz ist es oftmals sehr schwierig, die Kosten für Installation und Unterhalt vorgenannter technischer Infrastruktur aufzubringen.

Als Alternative zu derartigen klassischen Bezahlsystemen mittels Girokarte oder Kreditkarte haben sich in letzter Zeit verschiedene Smartphone-basierte Bezahlsysteme etabliert, die jedoch ebenfalls eine technische Infrastruktur beim Händler voraussetzen, so ein elektronisches Kassensystem, welches mit dem Smartphone interagiert. Trotz Substitution der Kartenleser durch derartige mobile Smartphone-Applikationen besteht nach wie vor das Bedürfnis nach einem sicheren und zugleich einfachen Bezahlsystem, das im Vergleich zu den aus dem Stand der Technik bekannten Systemen ganz ohne technische Infrastruktur beim Händler auskommt und eine Kontrolle der durch den Käufer getätigten Bezahlung ermöglicht.

Daher ist es Aufgabe der Erfindung, ein Verfahren und entsprechendes Computersystem anzugeben, mittels derer ein Händler in besonders einfacher und zugleich sicherer Weise kontrollieren kann, ob ein Käufer eine Ware bezahlt hat. Zudem ist es Aufgabe der Erfindung, ein Verfahren und entsprechendes Computersystem anzugeben, das im Vergleich zu den aus dem Stand der Technik bekannten und vorab diskutierten Ausgestaltungen gänzlich ohne technische Infrastruktur beim Händler auskommt, so dass das Verfahren besonders kostengünstig für den Händler nutzbar ist.

Die Lösung der Aufgabe erfolgt durch die Merkmale der unabhängigen Ansprüche. Vorteilhafte Ausgestaltungen der Erfindung sind in den Unteransprüchen angegeben.

Demnach wird die Aufgabe gelöst durch ein Verfahren zum Kontrollieren einer Transaktion zwischen einem Käufer und einem Händler zum Erwerb einer Ware, mit einem mobilen Endgerät, das zum Ausführen des Verfahrens eingerichtet ist, umfassend die Schritte:
a) Einlesen eines dem Händler zugeordneten Identifikationscodes durch das mobile Endgerät,
b) Erfassen eines Kaufbetrags der Ware und einer Transaktionsnummer einer Transaktionsliste durch das mobile Endgerät,
c) Veranlassen einer Gutschrift des Kaufbetrages für den Händler durch das mobile Endgerät,
d) Empfangen einer Quittierung der Gutschrift durch das mobile Endgerät, wobei
   die Quittierung wenigstens drei unterschiedliche Transaktionscodes umfasst,
   der erste Transaktionsode die Transaktionsnummer sowie eine der Transaktionsnummer zugeordnete erste Transaktionscodierung der Transaktionsliste umfasst,
   der zweite Transaktionscode eine zweite der Transaktionsnummer zugeordnete Transaktionskodierung der Transaktionsliste umfasst, und
   der dritte Transaktionscode den Kaufbetrag und eine dritte dem Kaufbetrag und der Transaktionsnummer zugeordnete Transaktionscodierung umfasst, und
e) Darstellen der Transaktionscodes der Quittierung auf einem Display des mobilen Endgerätes.

Die Erfindung stellt somit ein Verfahren bereit, mittels dessen ein Händler direkt und unmittelbar nach dem Kauf prüfen kann, ob die Bezahlung einer Ware erfolgt ist, ohne dass dafür technische Infrastruktur, wie ein Kartenterminal oder eine Datenverbindung für das Kartenterminal, beim Händler installiert sein muss. Mittels der Erfindung lässt sich eine digitale Bezahlquittung, die Quittierung, auf dem Display eines mobilen Endgerätes, so beispielsweise eines Smartphones, darstellen, so dass der Händler durch Vergleich der dargestellten Transaktionscodes mit der Transaktionsliste feststellen kann, ob die Quittierung gefälscht ist oder nicht.

Mit anderen Worten ermöglicht die Erfindung die Abbildung einer manipulationssicheren digitalen Quittierung, so einer Bezahlquittung, eines Kassenbons, eines Gutscheins, eines Coupons und/oder eines Tickets, auf einem Display eines prinzipiell beliebigen mobilen Endgerätes. Dadurch, dass die Quittierung wenigstens drei unterschiedliche Transaktionscodes umfasst, lässt sich durch Vergleich der dargestellten Quittierung mit der Transaktionsliste überprüfen, ob die Quittierung gefälscht ist oder nicht, so dass festgestellt werden kann, ob die Bezahlung der Ware stattgefunden hat.

Ein mögliches Betrugsrisiko wird somit signifikant reduziert, so insbesondere bei sogenannten Consumerzentrierten Geschäftsmodellen, die als einzige technische Infrastruktur ein mobiles Endgerät, so ein Smartphone, beim Käufer fordern, jedoch auf jedwede andere technische Infrastruktur, so Kartenleser oder elektronisches Kassensystem, beim Händler verzichten. Im Ergebnis wird durch die Erfindung ein fälschungssicherer Nachweis über eine erfolgte Bezahlung der Ware erzeugt, deren Echtheit der Händler durch simple Prüfung visueller Merkmale feststellen kann. Die Erfindung stellt damit ein besonders einfach handhabbares elektronisches Verfahren zur Bestätigung der Durchführung einer elektronischen Transaktion, vorzugsweise eines monetären Betrages vom Käufer zum Händler, dar, welches weitgehend ohne örtliche Begrenzung anwendbar ist, nur ein Minimum an in der Regel bereits vorhandener technischer Infrastruktur benötigt, so eines Smartphones als mobiles Endgerät, und dennoch für den beteiligten Käufer sowie Händler sicher ist.

In Schritt a) des Verfahrens erfolgt zunächst eine Identifikation des Händlers durch Einlesen eines dem Händler zugeordneten Identifikationscodes durch das mobile Endgerät. Das mobile Endgerät kann dazu als ein Smartphone, ein Tablet-PC oder vergleichbar ausgestaltet sein, wobei bevorzugt auf dem mobilen Endgerät eine Applikation installiert ist, die das in Rede stehende Verfahren ausführt. Insofern wird auch im Folgenden der Begriff "mobiles Endgerät" synonym mit Smartphone verwendet, ohne dass dies eine Beschränkung der Erfindung darstellt.

Nachdem nun der Identifikationscode, so beispielsweise ein QR-Code, durch das Smartphone erfasst ist, erfolgt in Schritt b) das Erfassen eines Kaufbetrages der Ware und einer Transaktionsnummer einer Transaktionsliste durch das mobile Endgerät. Während Waren in der Regel mit einem Kaufbetrag versehen sind, so beispielsweise mit einem Preisschild, so dass der Käufer den Kaufbetrag selbst der Ware ablesen kann, ist bevorzugt vorgesehen, dass der Händler über die Transaktionsliste verfügt. Zudem ist im Rahmen dieses Schrittes besonders bevorzugt, dass der Händler dem Käufer die Transaktionsnummer sowie den Kaufbetrag nennt, so dass der Käufer mittels eines Tastenfeldes auf der Smartphone-Applikation den Kaufbetrag als auch die Transaktionsnummer in die Applikation eingeben kann. Dabei wird unter dem Begriff "Applikation" im Rahmen der Erfindung ein Programmcode verstanden, der die Abarbeitung der Schritte des erfindungsgemäßen Verfahrens auf dem mobilen Endgerät ermöglicht.

Ebenso kann die Erfassung des Kaufbetrages der Ware durch Einlesen eines digitalen Preiscodes an der Ware vonstatten gehen, so beispielsweise durch Einlesen eines an der Ware angebrachten Barcodes. In jedem Fall ist vorgesehen, dass der Händler dem Käufer die Transaktionsnummer mitteilt und sowohl der Kaufbetrag und die Transaktionsnummer durch das mobile Endgerät durch den Schritt b) erfasst werden. Dabei weist die Transaktionsliste bevorzugt eine Mehrzahl von Transaktionsnummern auf, die entweder einmal oder mehrfach verwendbar sind.

Während des Schrittes c) wird durch das mobile Endgerät veranlasst, dass der Kaufbetrag für den Händler gutgeschrieben wird. Bevorzugt kommuniziert dazu das mobile Endgerät mittels einer drahtlosen Datenverbindung mit einem Transaktionssystem, welche eine monetäre Transaktion, so zwischen den Banken oder Zahlungsinstituten des Käufers und dem Händler ausführt. Mit anderen Worten wird also der während des Schrittes b) erfasste Kaufbetrag durch den Schritt c) dem Händler gutgeschrieben, so beispielsweise durch eine elektronische Transaktion zwischen den Transaktionssystemen des Käufers sowie des Händlers.

Nachdem nun der Kaufbetrag im Schritt c) dem Händler gutgeschrieben ist, erfolgt in Schritt d) das Empfangen einer Quittierung der Gutschrift durch das mobile Endgerät, welches die Quittierung vorzugsweise von einem Computersystem empfängt. In Schritt e) erfolgt schließlich die Darstellung der Quittierung auf einem Display des mobilen Endgerätes, so dass der Händler vorzugsweise durch visuellen Vergleich der Quittierung mit der Transaktionsliste vergleichen kann, ob denn die Quittierung gefälscht ist oder nicht. Sofern es sich nicht um eine Fälschung handelt, ist der Kaufbetrag dem Händler gutgeschrieben worden, so beispielsweise auf ein elektronisches Händlerkonto des Händlers überwiesen worden.

Dabei umfasst die Quittierung wenigstens drei unterschiedliche Transaktionscodes, die vorzugsweise alle während des Schrittes e) auf dem Display des mobilen Endgerätes dargestellt werden. Dadurch, dass die Quittierung wenigstens drei jeweils unterschiedliche Transaktionscodes umfasst, ist die Quittierung manipulationssicher ausgestaltet. Bevorzugt weisen die drei unterschiedlichen Transaktionscodes unterschiedliche visuelle Merkmale und Variationen auf, so dass der Händler anhand eines visuellen Vergleiches der auf dem Display des mobilen Endgerätes dargestellten Quittierung mit der Transaktionsliste feststellen kann, ob die Quittierung keine Fälschung ist.

Der erste Transaktionscode umfasst einerseits die Transaktionsnummer sowie eine der Transaktionsnummer zugeordnete erste Transaktionscodierung der Transaktionsliste. Die erste Transaktionskodierung kann beispielsweise ein Symbol sein, so die graphische Darstellung eines Rucksacks und/oder eines römischen Triumphbogens. Bevorzugt ist die entsprechende erste Transaktionskodierung ebenso auf der Transaktionsliste zugeordnet zu der entsprechenden Transaktionsnummer abgebildet und weiter bevorzugt ist eine Transaktionscodierung eine graphische Ausgestaltung der jeweiligen Transaktionsnummer. Bei dem zweiten Transaktionscode handelt es sich um eine zweite der Transaktionsnummer zugeordnete Transaktionskodierung der Transaktionsliste, welche bevorzugt ebenso eine graphische Ausgestaltung ist, so beispielsweise ein Rahmen, der die Transaktionsnummer einfasst. Bevorzugt ist die zweite Transaktionskodierung ebenso auf der Transaktionsliste abgebildet, welche, dem vorliegenden Beispiel folgend, beispielsweise den Rucksack sowie den römischen Triumphbogen als auch zugeordnet dazu die Transaktionsnummer umrandet durch den Rahmen zeigt. Bei dem dritten Transaktionscode handelt es sich schließlich um den Kaufbetrag sowie eine dritte dem Kaufbetrag und der Transaktionsnummer zugeordnete Transaktionskodierung, welche beispielsweise eine inverse Darstellung des Kaufbetrages auf dem Display des mobilen Endgerätes bedeuten kann.

Nach einer weiteren bevorzugten Ausführungsform weist die Quittierung wenigstens vier unterschiedliche Transaktionscodes auf, wobei der vierte Transaktionscode einen Zeitstempel des Zeitpunkts der Quittierung umfasst. Da in der Regel davon auszugehen ist, dass zum Zeitpunkt des Kaufs der Bezahl- bzw. Quittiervorgang durchgeführt wird, kann der Händler durch den Zeitstempel ganz einfach überprüfen, zu welchem Zeitpunkt die Gutschrift des Kaufbetrages vorzugsweise auf das elektronische Konto des Händlers vorgenommen worden ist. Durch diesen vierten Transaktionscode wird die Fälschungssicherheit des Verfahrens nochmals verbessert.

Nach einer besonders bevorzugten Ausgestaltung umfasst das Verfahren ferner den Schritt f) Vergleichen der angezeigten Transaktionscodes mit der Transaktionsliste. Bevorzugt erfolgt der Vergleich des ersten Transaktionscodes des zweiten Transaktionscodes und/oder des dritten Transaktionscodes mit der Transaktionsliste. Bevorzugt erfolgt der Vergleich rein visuell durch Vergleich der Transaktionsliste mit der dargestellten Quittierung.

Grundsätzlich kann die Darstellung der Transaktionscodes auf dem Display des mobilen Endgerätes beliebig erfolgen. Nach einer besonders bevorzugten Ausgestaltung ist jedoch vorgesehen, dass in Schritt e) die Darstellung des Kaufbetrages des dritten Transaktionscodes wenigstens einen anderen Transaktionscode wenigstens teilweise überdeckt, eine Musterung die Darstellung aller Transaktionscodes wenigstens teilweise überdeckt, und/oder die Darstellung des Kaufbetrages des dritten Transaktionscodes wenigstens durch eine Ziffer umrahmt ist. Durch vorgenannte Ausgestaltungen wird die Fälschungssicherheit nochmals erhöht, da, im Falle einer Fälschung, beispielsweise die überdeckte Darstellung verschiedener Transaktionscodes die Extraktion eines Transaktionscodes und Ersetzung mit einem anderen Transaktionscode, so zum Einfügen eines neuen Zeitstempels, sehr aufwändig ist. Ferner ist bevorzugt, dass bei verschiedenen Bezahlvorgängen vorgenannte Merkmale in unterschiedlicher, ungeordneter Reihenfolge angewendet werden, so dass sich dadurch sich bei jedem neuen Bezahlvorgang die Darstellung der Quittierung ändert. Zudem ist bevorzugt, dass die Musterung als Wellenmuster, als Streifenmuster und/oder Zahlenmuster ausgestaltet ist. Ein Zahlenmuster weist vorzugsweise eine Mehrzahl von Zahlen auf und ist als sogenannter "Quittungseffekt" bekannt. In derartiger Ausgestaltung stellt die Musterung ein technisches Mittel dar, mittels dessen eine maschinelle Fälschung der Quittierung verunmöglicht wird.

Gemäß des erstgenannten Merkmals, Überdeckung wenigstens eines anderen Transaktionscodes durch den Kaufbetrag, wird beispielsweise, dem vorherigen Beispiel folgend, der Rucksack und der römische Triumphbogen durch den Kaufbetrag zumindest teilweise überdeckt, was anders herum jedoch bedeutet, dass der Kaufbetrag im Vordergrund stehend besonders einfach erkennbar ist. Überdeckung kann dabei einerseits bedeuten, dass, anhand des in Rede stehenden Merkmals, der Kaufbetrag über einem anderen Transaktionscode dargestellt wird, so also der andere Transaktionscode nur teilweise dargestellt bzw. verdeckt ist, oder aber der Kaufbetrag wenigstens teiltransparent dargestellt ist, so dass eine teilweise Überdeckung des anderen Transaktionscodes erfolgt.

Ebenso kann eine Musterung die Darstellung aller Transaktionscodes wenigstens teilweise überdecken, wobei die Musterung beispielsweise als Wellenmuster, Streifenmuster oder sonstiges Muster ausgestaltet sein kann. Bevorzugt ist die Musterung transparent auf dem Display dargestellt. Ebenso kann die Darstellung des Kaufbetrages des dritten Transaktionscodes durch eine Ziffer umrahmt sein, so beispielsweise durch einen Punkt, der einmal vor dem Kaufbetrag und einmal nach dem Kaufbetrag dargestellt ist.

Im Ergebnis wird durch eine derartige Überdeckung bzw. Überlagerung der einzelnen Transaktionscodes ein einfaches Ausschneiden und Ersetzen der jeweiligen Transaktionscodes verhindert, da beispielsweise durch des Wellenmusters alle Transaktionscodes der Quittierung zu einem einzigen Bild "verwebt" werden, was die Fälschungssicherheit der so dargestellten Quittierung beträchtlich erhöht. Denn durch den durch das Wellenmuster hervorgerufenen "Stempeleffekt" werden die Transaktionscodes einschließlich des Kaufbetrages vorzugsweise nahtlos miteinander im dargestellten Bild der Quittierung auf dem Display des Smartphones verbunden, so dass kleinste Varianten durch Ausschneiden einzelner Transaktionscodes durch Unregelmäßigkeiten in dem Wellenmuster sofort für das menschliche Auge sichtbar werden. Bevorzugt ist dabei das Wellenmuster derart ausgestaltet, dass Konturen der anderen Transaktionscodes durch das Wellenmuster gekreuzt werden.

Nach einer weiteren Ausgestaltung ist bevorzugt, dass der vierte Transaktionscode wenigstens einen anderen Transaktionscode wenigstens teilweise überdeckt und/oder überlappt. Da sich der Zeitstempel des vierten Transaktionscodes bei jedem Kauf ändert, können Fälschungen besonders einfach festgestellt werden. Bevorzugt überdeckt der vierte Transaktionscode den zweiten Transaktionscode wenigstens teilweise, ganz besonders bevorzugt in transparenter Weise. Zudem erfolgt bevorzugt eine wenigstens teilweise Überdeckung des vierten Transaktionscodes mit dem ersten Transaktionscode. Weiter bevorzugt erfolgt die Darstellung des dritten Transaktionscodes mittig relativ zu der Darstellung des ersten Transaktionscodes. Dabei ist ganz besonders bevorzugt vorgesehen, dass die flächige Ausdehnung des ersten Transaktionscodes größer als die flächige Ausdehnung des dritten Transaktionscodes in der Darstellung auf dem Display des mobilen Endgerätes ist. Alle vorgenannten Ausgestaltungen haben den technischen Effekt, dass die dargestellte Quittierung nicht mittels eines computerimplementierten Erkennungsverfahrens entzifferbar und modifizierbar ist.

Nach einer weiteren bevorzugten Ausgestaltung weist das Verfahren den Schritt b') Bereitstellen einer Bestätigungs-und/oder Änderungseingabe für den Kaufbetrag durch das mobile Endgerät auf. Dadurch lässt sich vor dem Bezahlvorgang mittels Schritt c) nochmals der Kaufbetrag prüfen bzw. ändern, so dass beispielsweise der Käufer ein Trinkgeld dem Kaufbetrag hinzufügen kann. Für den derart geänderten Kaufbetrag erfolgt vorzugsweise in Schritt c) die Gutschrift für den Händler, so durch Durchführung einer elektronischen Buchung von einem dem Käufer zugeordneten elektronischen Bankkonto hin zu einem dem Händler zugeordneten elektronischen Bankkonto.

Grundsätzlich kann der Identifikationscode beliebig ausgestaltet sein, wobei besonders bevorzugt der Identifikationscode ein QR-Code ist, und das Einlesen des Identifikationscodes mit dem Endgerät das Aufnehmen eines Bildes des QR-Codes mit einer Kamera des Endgeräts umfasst. Entsprechende Ausgestaltungen dazu, so beispielsweise Applikationen für ein Smartphone zum Erfassen eines QR-Codes, sind aus dem Stand der Technik bekannt, wobei besonders bevorzugt derartige Funktionalität in einer Applikation zum Ausführen des erfindungsgemäßen Verfahren integriert ist. Dadurch wird der Bedienkomfort wesentlich verbessert, da der Käufer nicht unterschiedliche Applikationen auf dem Smartphone bedienen muss.

Die Aufgabe der Erfindung wird weiterhin gelöst durch ein Verfahren zum Stornieren einer Transaktion zwischen einem Käufer und einem Händler beim Erwerb einer Ware, mit einem mobilen Endgerät, das zum Ausführen des Verfahrens eingerichtet ist, umfassend die Schritte:
p) Erfassen einer Stornierung durch das mobile Endgerät,
q) Erfassen eines Stornierungscodes durch das mobile Endgerät,
r) Einlesen eines dem Händler zugeordneten Identifikationscodes durch das mobile Endgerät,
s) Empfangen einer Transaktionsnummer und einer Mehrzahl erster Transaktionscodes der Stornierung durch das mobile Endgerät,
t) Auswählen eines ersten Transaktionscodes auf einem Display des mobilen Endgerätes, und
u) Darstellen einer Stornierungsbestätigung durch das mobile Endgerät umfassend die Transaktionsnummer und den ausgewählten ersten Transaktionscode.

Vorzugsweise weist die weiter oben beschriebene Applikation zur Durchführung des Verfahrens zum Kontrollieren einer Transaktion ebenso Programmcodes zum Durchführen des Verfahrens zum Stornieren einer Transaktion auf, so dass beide Verfahren besonders einfach in nur einer einzigen Applikation zusammen ausgeführt werden können. Bei einer derartigen Implementierung weist die Applikation vorzugsweise für den Schritt p) einen Button auf, mittels derer der Stornierungsvorgang gestartet werden kann.

Nach Eingabe eines Stornierungscodes in Schritt q), so beispielsweise eines Pincodes, und Erfassung des dem Händler zugeordneten Identifikationscodes durch das mobile Endgerät, so beispielsweise des in Rede stehenden QR-Codes zur Identifikation des Händlers, erfolgt bevorzugt zunächst die Darstellung des Kaufbetrags, so gegebenenfalls einschließlich eines Trinkgelds oder anderer zusätzlicher Zahlungen. Nachdem dies erfolgt ist, erfolgt bevorzugt in Schritt s) das Empfangen einer Transaktionsnummer und einer Mehrzahl ersten Transaktionscodes der Stornierung durch das mobile Endgerät.

Ganz besonders bevorzugt ist der erste Transaktionscode bei der Darstellung in Schritt t) auf dem Display des mobilen Endgerätes durch einen schraffierten Balken wenigstens teilverdeckt und umfasst zusätzlich eine Beschriftung, so, dem vorhergehenden Beispiel folgend, beispielsweise "Rucksack" sowie "römischer Triumphbogen". Dadurch lässt sich besonders einfach erkennen, dass der erste Transaktionscode der Stornierung dient. Nach Auswahl des entsprechenden ersten Transaktionscodes erfolgt in Schritt u) die Stornierung des Kaufbetrags und vorzugsweise entsprechende Rückübertragung von einem elektronischen Konto des Käufers auf ein elektronisches Konto des Händlers. Nach erfolgter Stornierung erfolgt dann in Schritt u) das Darstellen einer Stornierungsbestätigung durch das mobile Endgerät, welche die Transaktionsnummer und den ausgewählten ersten Transaktionscode umfasst. Der Händler kann nun durch Vergleich des dargestellten ersten Transaktionscodes mit seiner Transaktionsliste kontrollieren, ob die Stornierung stattgefunden hat.

Die Aufgabe der Erfindung wird weiterhin gelöst durch ein Computersystem zum Betreiben des in Rede stehenden Verfahrens, mit einem Paymentserver eingerichtet zum Veranlassen der Gutschrift des Kaufbetrages für den Händler, einem Symbolserver eingerichtet zum Erstellen der Transaktionscodes der Quittierung, einem Checklistserver eingerichtet zum Erstellen der Transaktionsliste umfassend die Transaktionsnummer, die erste Transaktionscodierung sowie die zweite Transaktionscodierung, sowie einem mit dem Paymentserver, dem Symbolserver und dem Checklistserver verbundenen Imageserver eingerichtet zum Erstellen der Quittierung und zum Übertragen der Quittierung an das mobile Endgerät.

Bevorzugt verfügt der Paymentserver über eine elektronische Anbindung an ein Zahlungsinstitut des Käufers, so dass die Gutschrift des Kaufbetrages an ein elektronisches Bankkonto des Händlers veranlasst werden kann. Im Falle einer Stornierung erfolgt entsprechend eine Rücküberweisung des Kaufbetrages von dem elektronischen Bankkonto des Händlers zu dem elektronischen Bankkonto des Käufers. Weiter bevorzugt ist der Paymentserver eingerichtet zum Erstellen des Zeitstempels des Zeitpunkts der Quittierung sowie zum Verarbeiten des Kaufbetrages. Der Symbolserver ist eingerichtet zum Erstellen der Transaktionscodes der Quittierung, so beispielsweise des Wellenmusters, des Rahmens und/oder der graphischen Symbole der ersten Transaktionscodierung, wie beispielsweise, dem vorliegenden Beispiel folgend, der graphischen Darstellung eines Rucksacks sowie eines römischen Triumphbogens.

Der Checklistserver hält bevorzugt eine elektronische Kopie der Transaktionsliste bereit, welche bevorzugt eine Mehrzahl von Transaktionsnummern umfasst, wobei jeder Transaktionsnummer jeweils eine erste Transaktionscodierung sowie eine zweite Transaktionscodierung zugeordnet sind. Ebenso ist der Checklistserver bevorzugt ausgestaltet, die Transaktionsliste in Papierform zu erstellen, so dass diese postalisch dem Händler vor Durchführung des Verfahrens zugeleitet werden kann. Der Checklistserver schließlich ist ausgestaltet, vorzugsweise mittels sogenannter Rendering Rules, aus dem von den einzelnen Servern erhaltenen Informationen die Quittierung zu erstellen und an das mobile Endgerät bevorzugt mittels einer gesicherten Verbindung zu übertragen bzw. für die Kommunikation zwischen dem mobilen Endgerät und dem in Rede stehenden Imageserver.

Nach einer bevorzugten Ausgestaltung ist der Symbolserver zum Erstellen des zweiten Transaktionscodes derart eingerichtet, dass der zweite Transaktionscode in Schritt e) wenigstens als fünf unterschiedliche zweite der Transaktionsnummer zugeordnete Transaktionscodierungen darstellbar ist, wobei die zweite Transaktionscodierung wenigstens aus den Darstellungen keine Darstellung, Rechteckdarstellung, Rechteckrahmendarstellung, Rundeckdarstellung oder Rundeckrahmendarstellung auswählbar ist und/oder die Farbdarstellung der zweiten Transaktionscodierung aus einem Bereich von einschließlich RGB 80, 80, 80 bis einschließlich RGB 120, 120, 120 auswählbar ist. Dabei steht RGB für die Abkürzung Rot, Grün und Blau des aus dem Stand der Technik bekannten Farbraums und die Ziffern 80, 80, 80 sowie 120, 120, 120 für jeweilige Intensität der vorgenannten Farben, wie dem Fachmann bekannt ist. Durch die Ausgestaltung lassen sich also wenigstens fünf unterschiedliche Zustände der graphischen Darstellung des Rahmens erreichen, welche bevorzugt den ersten Transaktionscode und/oder den dritten Transaktionscode einfasst. Weiter bevorzugt ist die Farbe in wenigstens 40 unterschiedlichen Stufen zwischen RGB 80, 80, 80 bis RGB 120, 120, 120 auswählbar und entsprechend auf dem Display des mobilen Endgerätes darstellbar.

Nach einer weiteren bevorzugten Ausgestaltung ist der Symbolserver zum Erstellen des dritten Transaktionscodes derart eingerichtet, dass der dritte Transaktionscode in Schritt e) wenigstens als zwei unterschiedliche dritte dem Kaufbetrag und der Transaktionsnummer zugeordnete Transaktionscodierungen darstellbar ist, wobei die dritte Transaktionscodierung wenigstens aus den Darstellungen Schwarz oder Weiß invertiert auswählbar ist. Mit anderen Worten ist gemäß dieser Ausgestaltung vorgesehen, dass der Kaufbetrag entweder in schwarzer oder weißer Farbe auf dem Display dargestellt wird, so vorzugsweise in einer schwarzen Schriftart oder in einer Schriftart derart, dass der Kaufbetrag weiß invertiert durch weiße Zahlen mit schwarzen Randlinien dargestellt ist.

Nach einer weiteren bevorzugten Ausgestaltung ist der Symbolserver zum Erstellen des ersten und/oder des dritten Transaktionscodes derart eingerichtet, dass die Transaktionsnummer in Schritt e) in einem Bereich von wenigstens +/- 3 Pixel der y-Achse des Displays versetzt darstellbar ist und/oder der Kaufbetrag in einem Bereich von wenigstens +/- 5 Pixel der y-Achse und/oder x-Achse des Displays versetzt darstellbar ist. Durch derartige Ausgestaltungen lassen sich die Transaktionsnummer in wenigstens sieben unterschiedlichen Zuständen und der Kaufbetrag in wenigstens elf unterschiedlichen Zuständen auf dem Display darstellen, wobei bevorzugt bei jeder Darstellung eines Kaufbetrages ein anderer Zustand gewählt wird und jeder Zustand durch eine andere Position auf dem Display dargestellt ist.

Nach einer weiteren bevorzugten Ausgestaltung ist vorgesehen, dass der Symbolserver zum Erstellen der Musterung derart eingerichtet ist, dass die Musterung in Schritt e) wenigstens als fünf unterschiedliche Musterungen darstellbar ist und/oder die Musterung in einem Bereich von wenigstens +/- 5 Pixel der y-Achse des Displays versetzt darstellbar ist. Die Muster können beispielsweise ein Wellenmuster, ein gestreiftes und/oder kariertes Muster umfassen.

Schließlich ist der Symbolserver zum Erstellen des vierten Transaktionscodes derart eingerichtet, dass der Zeitstempel in Schritt e) wenigstens mit einer Transparenz in einem Bereich von +/- 50% darstellbar ist. Durch diese und vorgenannte Ausgestaltungen des Symbolservers wird der technische Effekt erreicht, dass die Darstellung der Quittierung auf dem Display des mobilen Endgerätes nicht durch ein computerbasiertes Erkennungsverfahren in die einzelnen Transaktionscodes zerlegbar ist. Die vorgenannten Ausgestaltungen tragen also ganz wesentlich zur Fälschungssicherheit der derart generierten und auf dem Display des mobilen Endgerätes dargestellten Quittierung bei.

Nach einer weiteren bevorzugten Ausgestaltung ist vorgesehen, dass der Checklistserver zum Erstellen der Transaktionsliste derart eingerichtet ist, dass die zweite Transaktionscodierung der Transaktionsnummer periodisch wechselt. Ganz besonders bevorzugt wechselt die zweite Transaktionscodierung periodisch alle zwei, drei oder sechs Einträge auf der Transaktionsliste.

Die Aufgabe der Erfindung wird ferner gelöst durch ein Bezahlsystem mit dem Computersystem wie vorab beschrieben sowie mit einem mobilen Endgerät, wobei das mobile Endgerät mit dem Computersystem über eine drahtlose Datenverbindung zur Ausführung des Verfahrens verbunden ist. Besonders bevorzugt ist das mobile Endgerät als Smartphone und/oder Tablet-PC ausgestaltet, wobei weiter bevorzugt das Verfahren als Applikation auf dem mobilen Endgerät vorgesehen ist. Die drahtlose Datenverbindung erfolgt bevorzugt mittels eines Mobilfunknetzes, wobei alternativ jedoch und/oder zusätzlich ebenso eine mobile Datenverbindung mittels Wireless LAN und/oder mittels einer drahtfesten Verbindung möglich ist.

Die Aufgabe der Erfindung wird ferner gelöst durch ein digitales Speichermedium mit elektronisch auslesbaren Steuersignalen, wobei die Steuersignale so mit einem mobilen Endgerät und/oder mit einem Computersystem zusammenwirken können, dass ein Verfahren wie vorab beschrieben ausgeführt wird.

Zudem wird die Aufgabe der Erfindung gelöst durch ein Computer-Programm-Produkt mit auf einem maschinenlesbaren Träger gespeicherten Programmcode zur Durchführung des vorab beschriebenen Verfahrens, wenn der Programmcode auf einem mobilen Endgerät ausgeführt wird.

Schließlich wird die Aufgabe der Erfindung gelöst durch ein Computer-Programm mit Programmcode zur Durchführung des Verfahrens wie vorab beschrieben, wenn das Programm auf einem mobilen Endgerät abläuft.

Nachfolgend wird die Erfindung unter Bezugnahme auf die anliegende Zeichnung anhand eines bevorzugten Ausführungsbeispiels näher erläutert.

Es zeigen
- Fig. 1: ein Verfahren zum Kontrollieren einer Transaktion zwischen einem Käufer und einem Händler zum Erwerb einer Ware gemäß einem bevorzugten Ausführungsbeispiel der Erfindung als Ablaufdiagramm,
- Fig. 2: eine Darstellung mit Quittierung auf einem Display eines mobilen Endgerätes in einer schematischen Ansicht,
- Fig. 3: die Quittierung gemäß Fig. 2 als Screenshot des mobilen Endgerätes,
- Fig. 3b: die Quittierung gemäß Fig. 2 als Screenshot des mobilen Endgerätes gemäß einer alternativen Ausgestaltung,
- Fig. 4: eine Transaktionsliste gemäß einem bevorzugten Ausführungsbeispiel in einer schematischen Ansicht,
- Fig. 5: die Transaktionsliste gemäß Fig. 4 in graphischer Ausgestaltung,
- Fig. 6: eine Quittierung in einer alternativen Ausgestaltung in einer vergrößerten Ansicht gemäß Fig. 2,
- Fig. 7: die Quittierung gemäß Fig. 6 als Screenshot des mobilen Endgerätes,
- Fig. 8: ein Computersystem zum Betreiben des Verfahrens gemäß dem bevorzugten Ausführungsbeispiel in einer schematischen Ansicht, und
- Fig. 9: ein Verfahren zum Stornieren einer Transaktion gemäß einer bevorzugten Ausgestaltung in einer schematischen Ansicht.

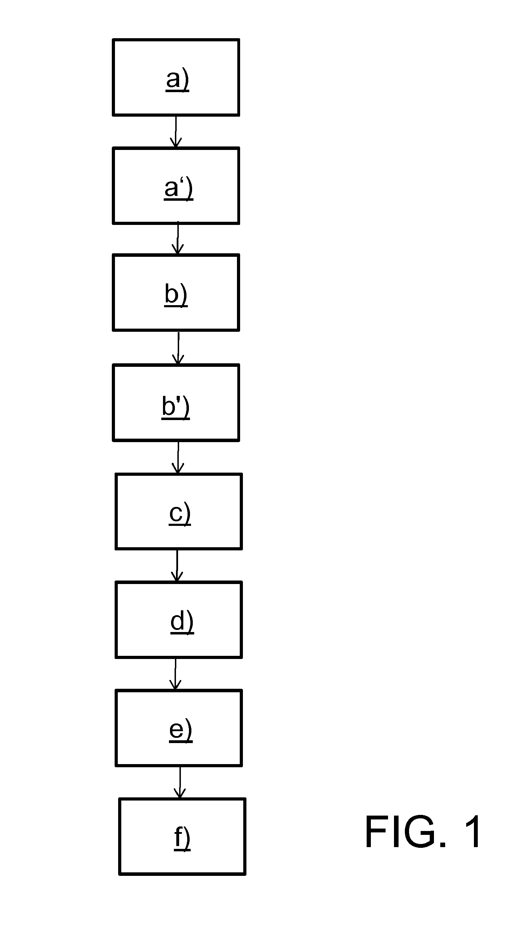

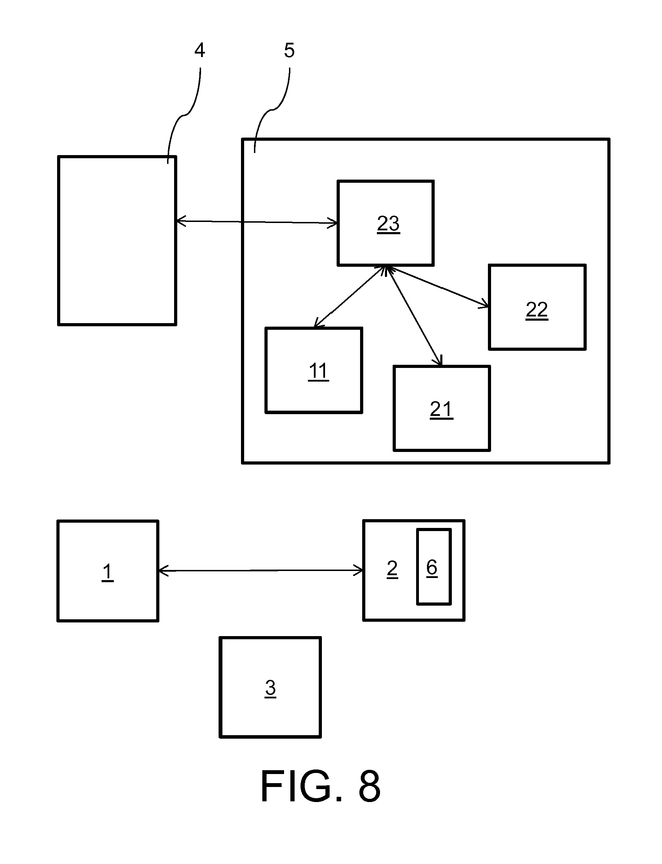

Fig. 1 zeigt ein Verfahren zum Kontrollieren einer Transaktion zwischen einem Käufer 1 und einem Händler 2 zum Erwerb einer Ware 3 mit einem mobilen Endgerät 4 als Ablaufdiagramm gemäß einem bevorzugten Ausführungsbeispiel der Erfindung, wobei in Fig. 8 ein Computersystem 5 zum Ausführen des Verfahrens mit dem mobilen Endgerät 4 gezeigt ist. Die Ware 3 kann dabei eine beliebige von einem Händler 2 erwerbbare Ware oder Dienstleistung sein, so beispielsweise eine Süßigkeit. Das mobile Endgerät 4 ist vorliegend als Smartphone ausgestaltet, wobei auf dem Smartphone 4 das Verfahren als Applikation abläuft.

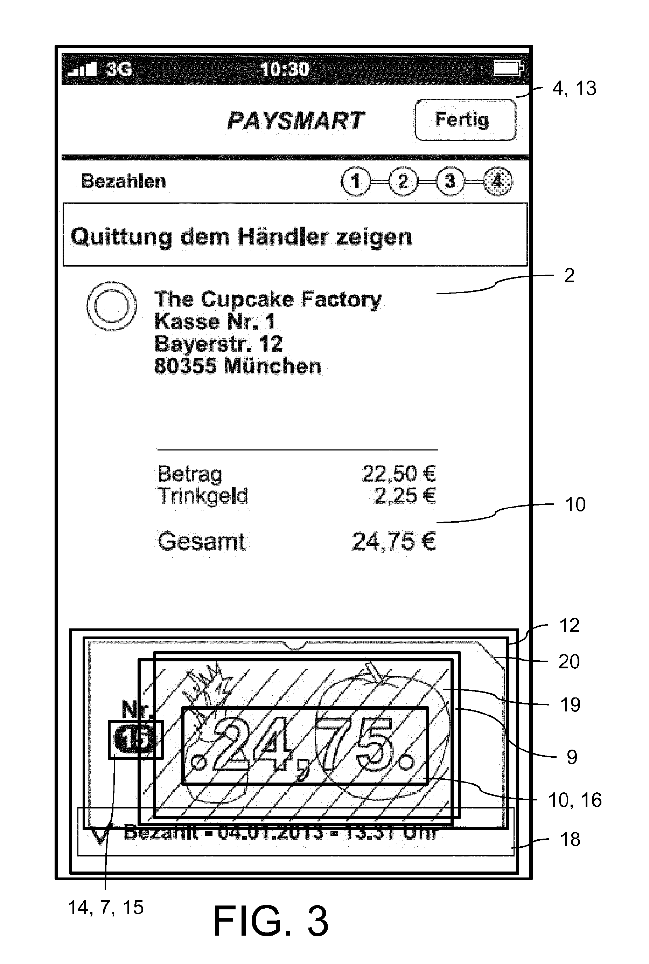

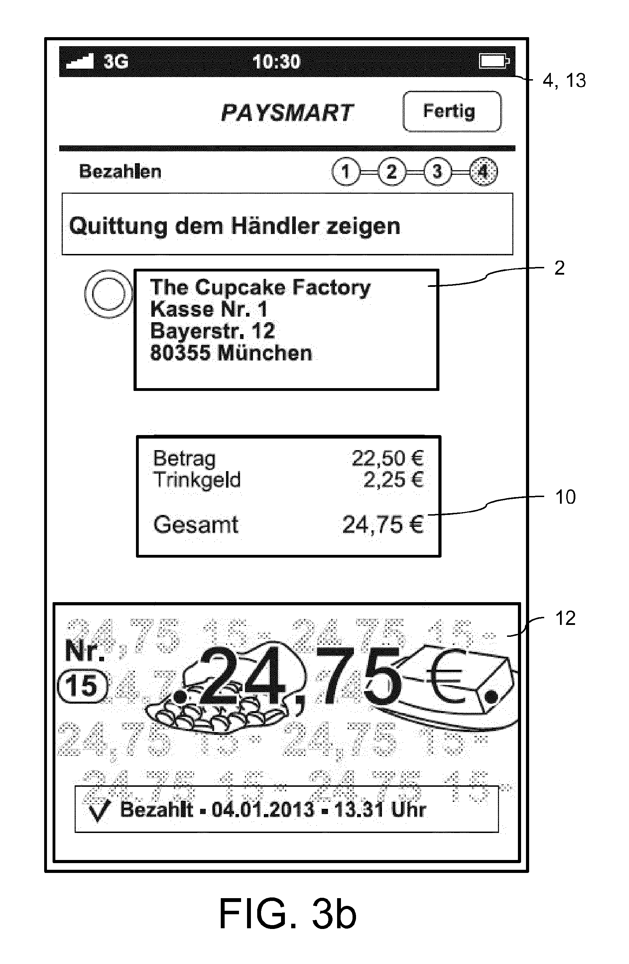

Im Schritt a) des Verfahrens erfolgt zunächst das Einlesen eines dem Händler 2 zugeordneten Identifikationscodes 6 durch das mobile Endgerät 4. Der Identifikationscode 6 ist als QR-Code ausgestaltet, wobei das Endgerät 4 mittels einer Kamera 4 den QR-Code erfasst, so dass, da der QR-Code dem Händler 2 zugeordnet ist, der betreffende Händler 2 identifiziert ist, vorliegend "The Cupcake Factory", wie aus Fig. 3 ersichtlich ist.

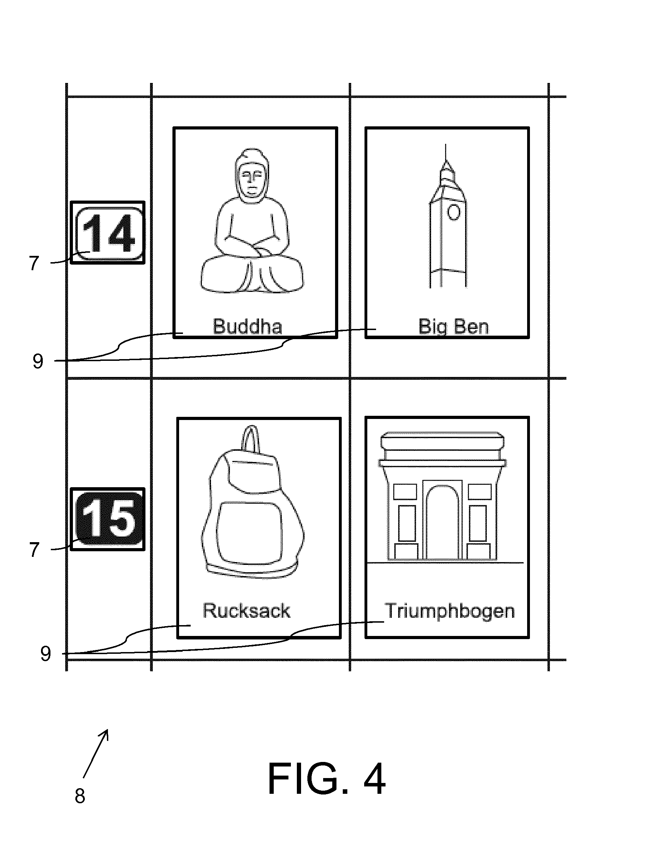

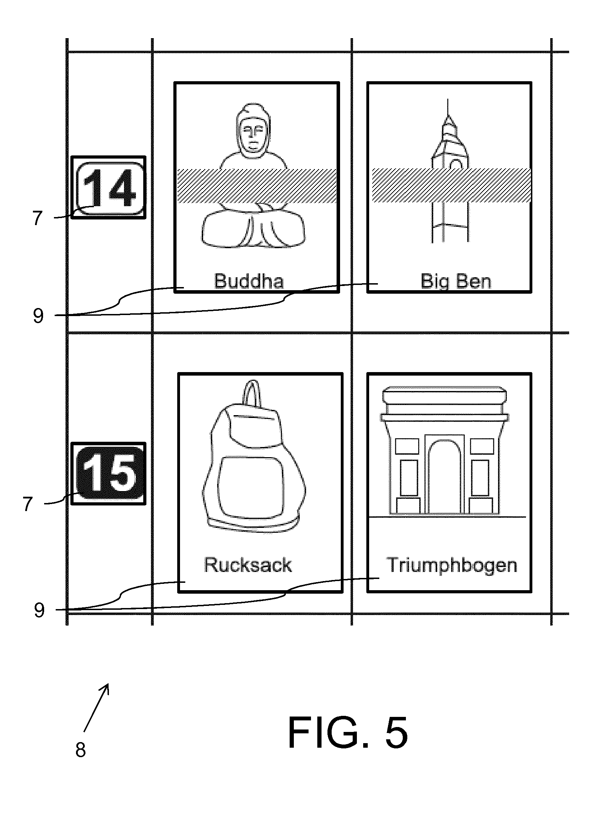

Im nun folgenden Schritt a') teilt der Händler 2 dem Käufer 1 den Kaufbetrag 10 der Ware 3 sowie eine Transaktionsnummer 7 einer Transaktionsliste 8 mit. Der Händler 2 verfügt dazu über eine ausgedruckte Transaktionsliste 8, welche schematisch in Fig. 4 sowie als Abschrift in Fig. 5 dargestellt ist. Die Transaktionsliste 8 verfügt über eine Mehrzahl von Transaktionsnummer 7, denen jeweils zwei erste Transaktionscodierungen 9 zugeordnet sind, so vorliegend der in Fig. 5 oben dargestellten Transaktionsnummer 7 mit der Bezeichnung "14", umrandet durch ein Rechteck, die beiden ersten Transaktionscodes 9, jeweils ebenso umrandet durch ein Rechteck, so die graphische Darstellung eines Buddhas sowie von Big Ben. Der zweite dargestellten Transaktionsnummer 7, die Ziffer "15", sind die beiden ersten Transaktionscodierungen 9, ebenso umrandet mit einem Rechteck als graphische Ausgestaltung eines Rucksacks sowie eines römischen Triumphbogens zugeordnet.

Im Schritt b) erfolgt dann das Erfassen des Kaufbetrages 10 der Ware 3 sowie der entsprechenden Transaktionsnummer 7 durch das mobile Endgerät 4, wobei die Applikation auf dem mobilen Endgerät 4 dafür eine Eingabeaufforderung zur Verfügung stellt, so dass der Käufer 1 sowohl den Kaufbetrag 10 der Ware 3 als auch die vom Händler 2 erhaltene Transaktionsnummer 7 in die Applikation des Smartphones eingeben kann.

In einem optionalen darauf folgenden Schritt b') wird durch das mobile Endgerät 4 eine Bestätigungs- und/oder Änderungseingabe für den Kaufbetrag 10 bereitgestellt, so dass der Käufer 1 beispielsweise zunächst den Kaufbetrag 10 ändern kann, um beispielsweise ein Trinkgeld hinzuzufügen, um sodann den geänderten Kaufbetrag 10 zu bestätigen. Nach Bestätigung des geänderten Kaufbetrages 10 sendet die Applikation den geänderten Kaufbetrag 10 sowie die eingegebene Transaktionsnummer 7 als auch den Identifikationscode 6 an das Computersystem 5.

Das Computersystem 5 weist einen Paymentserver 11 auf, der zum Veranlassen einer Gutschrift des Kaufbetrages 10 für den Händler 2 eingerichtet ist. Dazu kommuniziert der Paymentserver 11 elektronisch mit einem dem Käufer 1 zugeordneten Bankinstitut sowie mit einem dem Händler 2 zugeordneten Bankinstitut, um die Gutschrift des Kaufvertrages 10 zu veranlassen. In Schritt c) wird somit durch das mobile Endgerät 4 die Gutschrift des Kaufbetrages 10 für den Händler 2 veranlasst. In der Folge sendet dann das Computersystem 5 eine Quittierung 12 an das mobile Endgerät 4 zur Bestätigung der Gutschrift, also dass der Kaufbetrag 10 von dem Käufer 1 an den Händler 2 überwiesen worden ist, wobei die Quittierung 12 in Schritt d) durch das mobile Endgerät 4 empfangen wird.

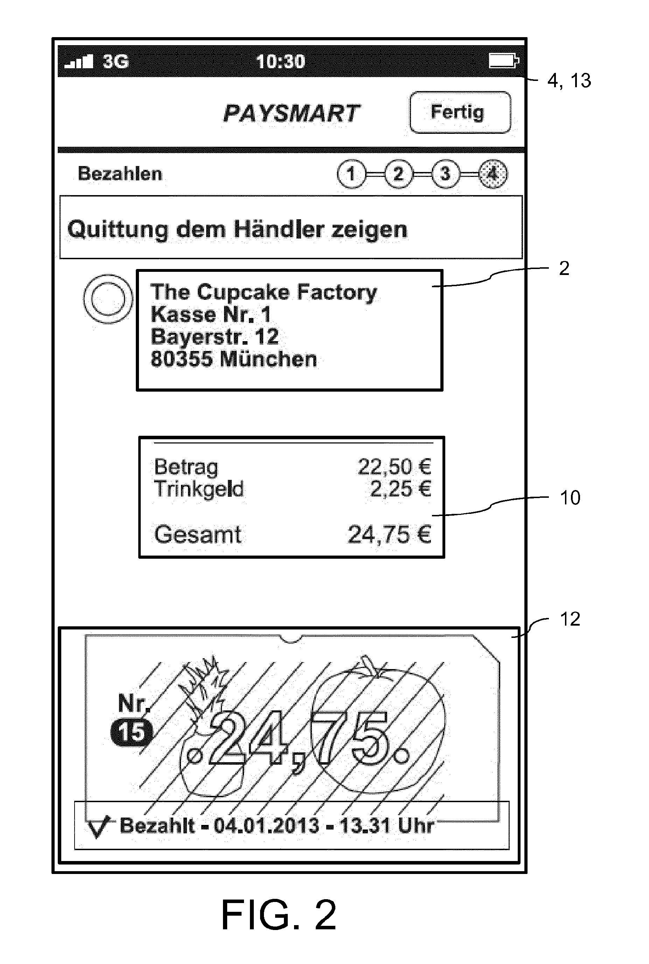

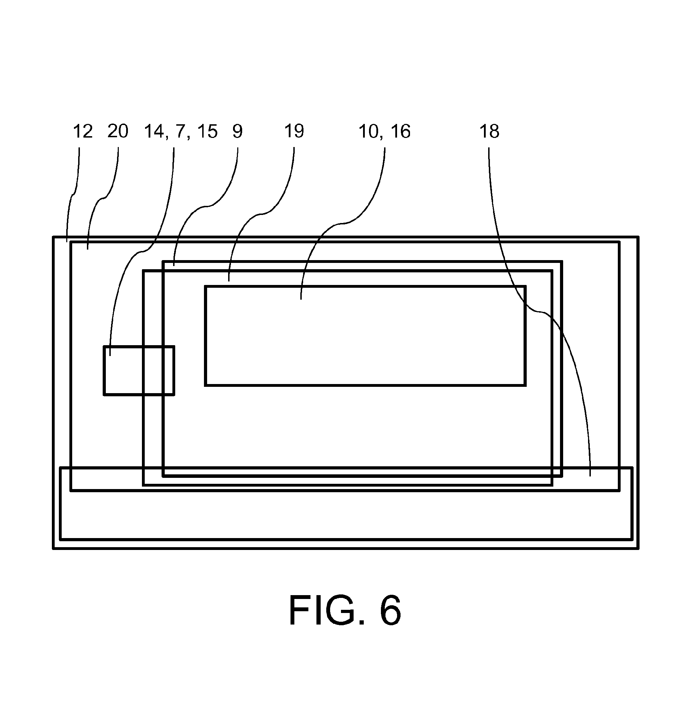

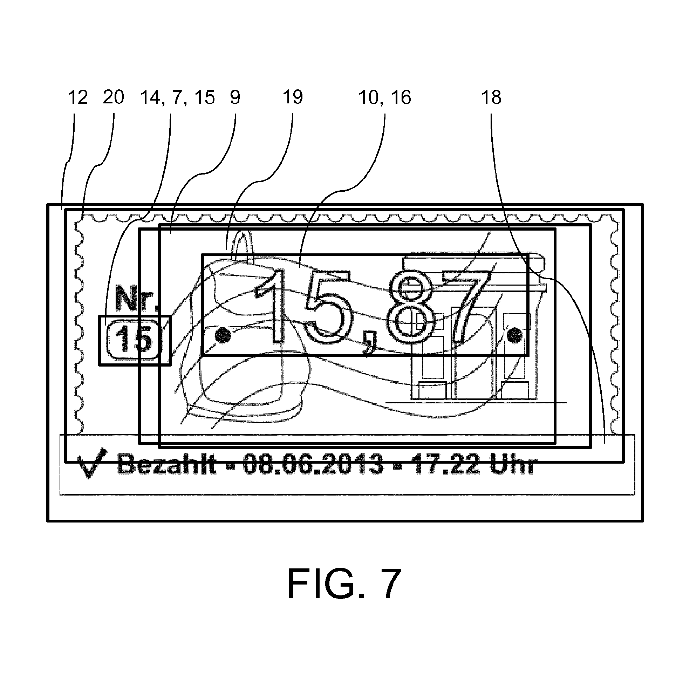

Die Quittierung 12 umfasst dabei vier unterschiedliche Transaktionscodes 14, 15, 16, 18, die schließlich in Schritt e) auf einem Display 13 des mobilen Endgerätes 4 in Schritt e) dargestellt werden, wie schematisch aus Fig. 2 sowie als Screenshot der Darstellung des mobilen Endgerätes 4 in Fig. 3 dargestellt. Eine weitere Detaillierung der Quittierung 12 ist in schematischer Ansicht aus Fig. 6 ersichtlich sowie als Vergrößerung des vorgenannten Screenshots in Fig. 7, wobei die jeweils dargestellten Elemente der Quittierung 12 durch rechteckige Umrandungen, welche mit den jeweiligen Bezugszeichen versehen sind, umfasst worden sind.

Die Quittierung 12 weist zunächst einen ersten Transaktionscode 14 auf, welcher die Transaktionsnummer 7 sowie die der Transaktionsnummer 7 zugeordnete erste Transaktionscodierung 9 der Transaktionsliste 8 umfasst. Die Transaktionsnummer 7 lautet vorliegend "15", wobei die erste Transaktionscodierung 9 vorliegend als graphische Darstellung eines Rucksacks sowie eines römischen Triumphbogens ausgestaltet ist. Zudem umfasst die Quittierung 12 einen zweiten Transaktionscode 15, welcher eine zweite der Transaktionsnummer 7 zugeordnete Transaktionscodierung 15 der Transaktionsliste 8 umfasst. Vorliegend ist die zweite Transaktionscodierung als Rahmen mit abgerundeten Ecken ausgestaltet, der die Transaktionsnummer 7 einfasst.

Ferner existiert ein dritter Transaktionscode 16, welcher den Kaufbetrag 10 sowie eine dritte dem Kaufbetrag 10 zugeordnete Transaktionscodierung 16 umfasst. Vorliegend ist der dritte Transaktionscode 16 durch Darstellung des Kaufbetrages 10 einerseits ausgestaltet sowie andererseits durch die dritte Transaktionscodierung 17 dadurch, dass sowohl der Kaufbetrag 10 als auch die Transaktionsnummer 7 normal, also mit schwarzer Schrift, dargestellt sind. Schließlich umfasst die Quittierung 12 einen vierten Transaktionscode 18, der einen Zeitstempel 18 des Zeitpunkts der Quittierung 12 darstellt.

Wie zudem aus Fig. 6 schematisch sowie aus Fig. 7 als Teil des Screenshots zu ersehen ist, existiert ferner eine Musterung 19, die die Darstellung aller Transaktionscodes 14, 15, 16 wenigstens teilweise überdeckt. Vorliegend ist die Musterung 19 als Wellenmuster ausgestaltet. Alternativ kann die Musterung 19 auch als Streifenmuster ausgestaltet sein, wie in Fig. 3 aus der Quittierung 12 ersichtlich ist, oder als sogenanntes Zahlenmuster bzw., mit sogenanntem "Quittungseffekt" ausgestaltet, wie in Fig. 3b aus der Quittierung 12 ersichtlich ist. In Fig. 3b ist die Quittierung 12 mit einer Musterung 19 hinterlegt, die verschiedene transparent dargestellte Zahlen sowie transparent dargestellte vertikale Streifen aufweist.

Die Anordnung der Transaktionscodes 14, 15, 16 auf der Quittierung erfolgt zudem derart, dass die Darstellung des Kaufbetrages 10 des dritten Transaktionscodes 16 sowohl den ersten Transaktionscode 14 als auch den zweiten Transaktionscode 15 wenigstens teilweise überdeckt, so dass vorliegend der Kaufbetrag 10 den dargestellten Rucksack sowie den römischen Triumphbogen wenigstens teilweise überdeckt. Zudem ist die Darstellung des Kaufbetrages 10 des dritten Transaktionscodes 16 durch einen Punkt ergänzt, der, wie aus Fig. 7 ersichtlich, jeweils vor und nach dem Kaufbetrag 10 dargestellt ist.

Um nun die Echtzeit der derart dargestellten Transaktionscodes 14, 15, 16 der Quittierung 12 zu prüfen, findet in Schritt f) ein Vergleich mit der Transaktionsliste 8 statt. Hier wird zunächst geprüft, ob die Transaktionsnummern 7 sowie die ersten Transaktionscodierungen 9 übereinstimmen, also die dargestellten Symbole Rucksack und römischer Triumphbogen. Zudem wird überprüft, ob der zweite Transaktionscode als zweite der Transaktionsnummer 7 zugeordnete Transaktionscodierung 15 richtig dargestellt ist.

Gemäß den in Fig. 5 und Fig. 7 dargestellten Screenshots fällt auf, dass die Transaktionsnummer 7 in Fig. 5 einerseits invers und andererseits mit einem abgerundeten Rechteck dargestellt ist, während in Fig. 7 die Transaktionsnummer 7 in schwarzer Schrift mit einem Rahmen mit abgerundeten Ecken, der nicht ausgefüllt ist, dargestellt ist, so dass durch visuellen Vergleich der Händler 2 erkennen kann, dass der zweite Transaktionscode 15 unrichtig auf dem Display 13 des mobilen Endgerätes dargestellt ist, so dass eine Fälschung vorliegt.

Zudem wird geprüft, ob der Kaufbetrag 10 sowie eine dritte dem Kaufbetrag 10 zugeordnete Transaktionscodierung 17 gleich sind. Konkret bedeutet dies, dass geprüft wird, ob der Kaufbetrag 10 sowie eine dritte dem Kaufbetrag 10 und der Transaktionsnummer 7 zugeordnete Transaktionscodierung 17 gleich sind, also die Transaktionsnummer 7 sowie der Kaufbetrag 10 beide schwarz oder weiß invers dargestellt sind.

Schließlich erfolgt noch die Prüfung des vierten Transaktionscodes 18, also ob ein valider Zeitstempel 18 vom Zeitpunkt der Quittierung 12 vorliegt. Wie vorab ausgeführt, wird die Fälschung einer derartigen Quittierung 12 durch drei sogenannte Ebenen erschwert. Zunächst erfolgt eine Überlagerung vorgenannter Transaktionscodes 14, 15, 16, 18, so dass eine Extrahierung einzelner Transaktionscodes und Ersetzung derselben, so beispielsweise eines aktualisierten Zeitstempels 18, äußerst aufwändig bzw. verunmöglicht ist.

Dadurch, dass die Musterung 19 die Transaktionscodes 14, 15, 16, 18 "verwebt" erfolgt eine nahtlose Verbindung der Transaktionscodes 14, 15, 16, 18, so dass kleinste Varianzen bei einer Fälschung durch Ausschneiden einzelner Transaktionscodes 14, 15, 16, 18 sofort durch die Musterung 19 sichtbar werden. Zudem enthält die Quittierung 12 ein sogenanntes Briefmarkenelement 20, welches verwebt mit dem Zeitstempel 18 dargestellt ist und im Hintergrund der Quittierung 12 abgebildet ist.

Zum Erstellen der Transaktionscodes 14, 15, 16, 18 der Quittierung 12 weist das Computersystem 5 einen Symbolserver 21 auf sowie einen Checklistserver 22, der zum Erstellen der Transaktionsliste 8 umfassend die Transaktionsnummer 7, die erste Transaktionscodierung 9 sowie die zweite Transaktionscodierung eingerichtet ist. Der Checklistserver 22 erlaubt somit einerseits die Generierung einer Transaktionsliste 8 und Übersendung an den Händler 2 sowie andererseits die Speicherung der in der Transaktionsliste 8 enthaltenen Transaktionsnummer 9 sowie Transaktionscodierungen 9, 15. Ein Imageserver 23 ist mit dem Paymentserver 11, dem Symbolserver 21 sowie dem Checklistserver 22 verbunden und ist eingerichtet zum Erstellen der Quittierung 12 und Übertragen der Quittierung 12 an das mobile Endgerät 4.

Mittels des Symbolservers 21 sind zudem die Transaktionscodes 14, 15, 16, 18 variierbar, so dass quasi bei jedem Bezahlvorgang eine unterschiedliche Darstellung auf dem Display 13 des mobilen Endgerätes 4 möglich ist. So ist die zweite Transaktionscodierung 15 aus unterschiedlichen Darstellungen, sowie Rechteck oder Rundeck sowie mit unterschiedlichen Farben in den Bereichen RGB 80, 80, 80 bis RGB 120, 120, 120 auswählbar. Ferner lässt sich mittels des Symbolservers 21 die schwarze oder weiß invertierte Darstellung des Kaufbetrages 10 sowie der Transaktionsnummer 7 erzeugen bzw. auswählen.

Zudem lässt sich mittels des Symbolservers 21 die Darstellung der Transaktionsnummer 7 sowie des Kaufbetrages 10 auf der x-Achse bzw. y-Achse des Displays 13 variieren, was ebenso auch für die Musterung 19 möglich ist. Ferner ist durch den Symbolserver 21 die Transparenz der Darstellung des Zeitstempels 18 in einem Bereich von +/- 50 % variierbar bzw. auf dem Display 13 darstellbar.

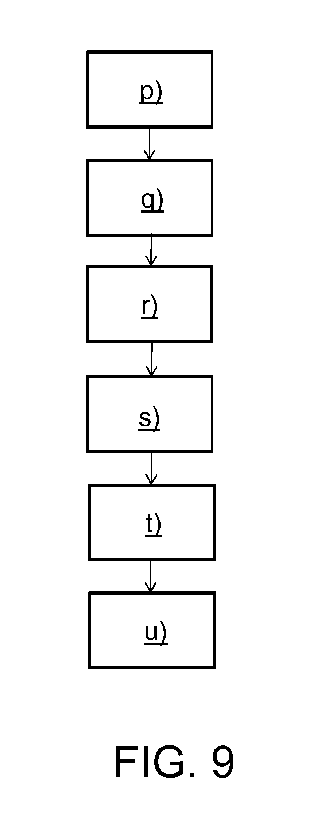

Schließlich ist noch in Fig. 9 ein schematisch dargestelltes Verfahren zum Stornieren der Transaktion zwischen dem Käufer 1 und dem Händler dargestellt, wobei das mobile Endgerät 4 dazu folgende Schritte ausführt, die ebenso in der Applikation auf dem mobilen Endgerät 4 ablaufen. In Schritt p) erfolgt zunächst die Erfassung einer Stornierung durch das mobile Endgerät, so durch Betätigen eines Buttons auf dem Display 13 des mobilen Endgerätes. Um die Stornierung durchführen zu können, ist in q) die Erfassung eines Stornierungscodes, so beispielsweise eines Pincodes, durch das mobile Endgerät 4 notwendig, welche durch eine Touch-Tastatur des mobilen Endgerätes 4 erfassbar ist.

Danach erfolgt in Schritt r) das Einlesen eines dem Händler 2 zugeordneten Identifikationscodes 6 durch das mobile Endgerät 4, so des bereits diskutierten QR-Codes. In Schritt s) erfolgt dann das Empfangen einer Transaktionsnummer 7 sowie einer Mehrzahl erster Transaktionscodes 14 der Stornierung durch das mobile Endgerät 4. Die Mehrzahl erster Transaktionscodes 14 werden dann auf dem Display 13 des mobilen Endgerätes dargestellt, wobei dazu die ersten Transaktionscodes 14 im Gegensatz zum vorgenannten Verfahren zum Kontrollieren der Transaktion nunmehr durch einen weiß schraffierten Balken im mittleren Bereich verdeckt sind, wie in Fig. 5 auch graphisch dargestellt ist.

Zudem werden im Gegensatz zum vorgenannten Quittungsverfahren Texte unter den dargestellten Symbolen dargestellt, wie Rucksack oder Triumphbogen. In Schritt t) erfolgt dann das Auswählen eines ersten, passenden Transaktionscodes 14 auf dem Display 13 des mobilen Endgerätes 4 sowie nachdem dann die Stornierung durch das mobile Endgerät 4 veranlasst worden ist, in Schritt u) ein Darstellen einer Stornierungsbestätigung durch das mobile Endgerät, welches die Transaktionsnummer 7 und den ausgewählten ersten Transaktionscode 14 umfasst.

Im Ergebnis wird durch das erfindungsgemäße Verfahren eine einerseits besonders einfache, andererseits jedoch besonders sichere Möglichkeit geschaffen, um einen sicheren Bezahl- und Quittierungsprozess bei einem Händler 3 durchzuführen, ohne dass bei dem Händler 2 technische Infrastruktur, wie Leseterminals etc., vorhanden sein müssen.

### Bezugszeichenliste

- Käufer: 1
- Händler: 2
- Ware: 3
- Mobiles Endgerät: 4
- Oberseite: 5
- Identifikationscode: 6
- Transaktionsnummer: 7
- Transaktionsliste: 8
- Erster Transaktionscodierung: 9
- Kaufbetrag: 10
- Paymentserver: 11
- Quittierung: 12
- Display: 13
- Erster Transaktionscode: 14
- Zweiter Transaktionscode: 15
- Dritter Transaktionscode: 16
- Dritte Transaktionscodierung: 17
- Vierter Transaktioncode: 18
- Musterung: 19
- Briefmarkenelement: 20
- Symbolserver: 21
- Checklistserver: 22
- Imageserver: 23

## Patentansprüche

1. Verfahren zum Kontrollieren einer Transaktion zwischen einem Käufer (1) und einem Händler (2) zum Erwerb einer Ware (3), mit einem mobilen Endgerät (4), das zum Ausführen des Verfahrens eingerichtet ist, umfassend die Schritte:
a) Einlesen eines dem Händler (2) zugeordneten Identifikationscodes (6) durch das mobile Endgerät (4),
b) Erfassen eines Kaufbetrags (10) der Ware (3) und einer Transaktionsnummer (7) einer Transaktionsliste (8) durch das mobile Endgerät (4),
c) Veranlassen einer Gutschrift des Kaufbetrages (10) für den Händler (2) durch das mobile Endgerät (4),
d) Empfangen einer Quittierung (12) der Gutschrift durch das mobile Endgerät (4), wobei
die Quittierung (12) wenigstens drei unterschiedliche Transaktionscodes (14, 15, 16) umfasst,
der erste Transaktionsode (14) die Transaktionsnummer (7) sowie eine der Transaktionsnummer (7) zugeordnete erste Transaktionscodierung (9) der Transaktionsliste (8) umfasst,
der zweite Transaktionscode (15) eine zweite der Transaktionsnummer (7) zugeordnete Transaktionskodierung (15) der Transaktionsliste (8) umfasst, und
der dritte Transaktionscode (16) den Kaufbetrag (10) und eine dritte dem Kaufbetrag (10) und der Transaktionsnummer (7) zugeordnete Transaktionscodierung (17) umfasst, und
e) Darstellen der Transaktionscodes (14, 15, 16) der Quittierung (12) auf einem Display (13) des mobilen Endgerätes (4).

2. Verfahren nach dem vorhergehenden Anspruch, wobei die Quittierung (12) wenigstens vier unterschiedliche Transaktionscodes (14, 15, 16, 18) umfasst und der vierte Transaktionscode (18) einen Zeitstempel (18) des Zeitpunkts der Quittierung (12) umfasst.

3. Verfahren nach einem der vorhergehenden Ansprüche, mit dem Schritt:
f) Vergleichen der angezeigten Transaktionscodes (14, 15, 16) mit der Transaktionsliste (8).

4. Verfahren nach einem der vorhergehenden Ansprüche, wobei in Schritt e)
die Darstellung des Kaufbetrages (10) des dritten Transaktionscodes (16) wenigstens einen anderen Transaktionscode (14, 15) wenigstens teilweise überdeckt,
eine Musterung (19) die Darstellung aller Transaktionscodes (14, 15, 16) wenigstens teilweise überdeckt, und/oder
die Darstellung des Kaufbetrages (10) des dritten Transaktionscodes (16) wenigstens durch eine Ziffer umrahmt ist.

5. Verfahren nach dem vorhergehenden Anspruch, mit der Musterung (19), wobei die Musterung (19) als Wellenmuster, als Streifenmuster und/oder Zahlenmuster ausgestaltet ist.

6. Verfahren nach einem der vorhergehenden Ansprüche, mit dem Schritt:
b') Bereitstellen einer Bestätigungs- und/oder Änderungseingabe für den Kaufbetrag (10) durch das mobile Endgerät (4).

7. Verfahren nach einem der vorhergehenden Ansprüche, wobei der Identifikationscode (6) ein QR-Code ist, und das Einlesen des Identifikationscodes (6) mit dem Endgerät (4) das Aufnehmen eines Bildes des QR-Codes mit einer Kamera (4) des Endgeräts (4) umfasst.

8. Verfahren zum Stornieren einer Transaktion zwischen einem Käufer (1) und einem Händler (2) beim Erwerb einer Ware (3), mit einem mobilen Endgerät (4), das zum Ausführen des Verfahrens eingerichtet ist, umfassend die Schritte:
p) Erfassen einer Stornierung durch das mobile Endgerät (4),
q) Erfassen eines Stornierungscodes durch das mobile Endgerät (4),
r) Einlesen eines dem Händler (2) zugeordneten Identifikationscodes (6) durch das mobile Endgerät (4),
s) Empfangen einer Transaktionsnummer (7) und einer Mehrzahl erster Transaktionscodes (14) der Stornierung durch das mobile Endgerät (4),
t) Auswählen eines ersten Transaktionscodes (14) auf einem Display (13) des mobilen Endgerätes (4), und
u) Darstellen einer Stornierungsbestätigung durch das mobile Endgerät (4) umfassend die Transaktionsnummer (7) und den ausgewählten ersten Transaktionscode (14).

9. Computersystem (5), eingerichtet zum Betreiben eines Verfahrens nach einem der vorhergehenden Ansprüche, mit
einem Paymentserver (11) eingerichtet zum Veranlassen der Gutschrift des Kaufbetrages (10) für den Händler (2),
einem Symbolserver (21) eingerichtet zum Erstellen der Transaktionscodes (14, 15, 16, 18) der Quittierung (12),
einem Checklistserver (22) eingerichtet zum Erstellen der Transaktionsliste (8) umfassend die Transaktionsnummer (7), die erste Transaktionscodierung (9) sowie die zweite Transaktionscodierung (15), sowie
einem mit dem Paymentserver (11), dem Symbolserver (21) und dem Checklistserver (22) verbundenen Imageserver (23) eingerichtet zum Erstellen der Quittierung (12) und zum Übertragen der Quittierung (12) an das mobile Endgerät (4).

10. Computersystem (5) nach dem vorhergehenden Anspruch, wobei der Symbolserver (21) zum Erstellen des zweiten Transaktionscodes (15) derart eingerichtet ist, dass der zweite Transaktionscode (15) in Schritt e) wenigstens als 5 unterschiedliche zweite der Transaktionsnummer (7) zugeordnete Transaktionskodierungen (15) darstellbar ist, wobei die zweite Transaktionskodierung (15) wenigstens aus den Darstellungen keine Darstellung, Rechteckdarstellung, Rechteckrahmendarstellung, Rundeckdarstellung oder Rundeckrahmendarstellung auswählbar ist und/oder die Farbdarstellung der zweiten Transaktionscodierung (15) aus einem Bereich von einschließlich RGB 80, 80, 80 bis einschließlich RGB 120, 120, 120 auswählbar ist.

11. Computersystem (5) nach einem der vorhergehenden Ansprüche, wobei der Symbolserver (21) zum Erstellen des dritten Transaktionscodes (16) derart eingerichtet ist, dass der dritte Transaktionscode (16) in Schritt e) wenigstens als 2 unterschiedliche dritte dem Kaufbetrag (10) und der Transaktionsnummer (7) zugeordnete Transaktionskodierungen (17) darstellbar ist, wobei die dritte Transaktionskodierung (17) wenigstens aus den Darstellungen schwarz oder weiß invertiert auswählbar ist.

12. Computersystem (5) nach einem der vorhergehenden Ansprüche, wobei der Symbolserver (21) zum Erstellen des ersten und/oder des dritten Transaktionscode (14, 16) derart eingerichtet ist, dass die Transaktionsnummer (7) in Schritt e) in einem Bereich von wenigsten +/- 3 Pixel der Y-Achse des Displays (13) versetzt darstellbar ist und/oder der Kaufbetrag (10) in einem Bereich von wenigsten +/- 5 Pixel der X-Achse und/oder Y-Achse des Displays (13) versetzt darstellbar ist.

13. Computersystem (5) nach einem der vorhergehenden Ansprüche und nach Anspruch 4 mit der Musterung (19), wobei der Symbolserver (21) zum Erstellen der Musterung (19) derart eingerichtet ist, dass die Musterung (19) in Schritt e) wenigstens als 5 unterschiedliche Musterungen (19) darstellbar ist und/oder die Musterung (19) in einem Bereich von wenigsten +/- 5 Pixel der X-Achse des Displays (13) versetzt darstellbar ist.

14. Computersystem (5) nach einem der vorhergehenden Ansprüche und nach Anspruch 2, wobei der Symbolserver (21) zum Erstellen des vierten Transaktionscode (18) derart eingerichtet ist, dass der Zeitstempel (18) in Schritt e) wenigstens mit einer Transparenz in einem Bereich von wenigsten +/- 50% darstellbar ist.

15. Computersystem (5) nach einem der vorhergehenden Ansprüche, wobei der Checklistserver (22) zum Erstellen der Transaktionsliste (8) derart eingerichtet ist, dass die zweite Transaktionscodierung (15) der Transaktionsnummer (7) periodisch wechselt.

16. Bezahlsystem mit einem Computersystem (5) nach einem der vorhergehenden Ansprüche und mit einem mobilen Endgerät (4), wobei das mobile Endgerät (4) mit dem Computersystem (5) über eine drahtlose Datenverbindung zur Ausführung des Verfahrens verbunden ist.
